# EUROPÄISCHE PATENTSCHRIFT

(11) **EP 2 193 962 B1**
(45) Veröffentlichungstag und Bekanntmachung des Hinweises auf die Patenterteilung: **15.05.2013**
(21) Anmeldenummer: 09173159.6
(22) Anmeldetag: 15.10.2009
(51) Int. Cl.: B60S 1/04

(54) **Scheibenwischvorrichtung in einem Fahrzeug**
Windscreen wiper device in a vehicle
Dispositif d'essuie-glace dans un véhicule

(30) Priorität: 08.12.2008 DE 102008054383
(43) Veröffentlichungstag der Anmeldung: 09.06.2010
(73) Patentinhaber: Robert Bosch GmbH, 70442 Stuttgart (DE)
(72) Erfinder: Hawighorst, Achim, 77830 Buehlertal (DE); Lauk, Detlef, 77871 Renchen (DE)

(56) Entgegenhaltungen:
- EP-A1- 1 607 292
- EP-A1- 1 681 215
- WO-A1-2005/080157
- WO-A2-2005/073039

## Beschreibung

Die Erfindung bezieht sich auf eine Scheibenwischvorrichtung in einem Fahrzeug nach dem Oberbegriff der Ansprüche 1, 5 und 11.

### Stand der Technik

In der EP 1 607 292 B1 wird eine Scheibenwischvorrichtung für ein Fahrzeug beschrieben, die einen Antriebsmechanismus für den Antrieb eines Wischarms einer Scheibenwischvorrichtung umfasst, wobei der Antriebsmechanismus an der Fahrzeugkarosserie des Fahrzeugs angeordnet ist. Die Verbindung zwischen dem Antriebsmechanismus und der Fahrzeugkarosserie erfolgt mithilfe einer Befestigungsplatte, auf die der Antriebsmechanismus aufgeschraubt wird. Die Befestigungsplatte wird unmittelbar auf die Fahrzeugkarosserie aufgeklebt.

Die Befestigungsplatte als Träger des Antriebsmechanismus stellt ein zusätzliches Bauteil dar, mit dem der Antriebsmechanismus zunächst durch Verschraubung verbunden werden muss. Die Klebeverbindung zwischen Befestigungsplatte und Fahrzeugkarosserie unterliegt einer Alterung, so dass über längere Betriebszeiträume eine feste Verbindung zwischen dem Antriebsmechanismus und der Fahrzeugkarosserie insbesondere auch unter Berücksichtigung der im Fahrtbetrieb auftretenden mechanischen und witterungsbedingten Belastungen nicht sicher gewährleistet ist. Zudem sind mehrere und unterschiedlich geartete Montageschritte für die Verbindung des Antriebsmechanismus mit der Fahrzeugkarosserie erforderlich.

### Offenbarung der Erfindung

Der Erfindung liegt die Aufgabe zu Grunde, mit einfachen konstruktiven Maßnahmen eine sichere und montagefreundliche Verbindung zwischen einer Antriebsvorrichtung einer Scheibenwischvorrichtung für ein Kraftfahrzeug und der Fahrzeugkarosserie zu schaffen.

Aus der WO 2005/080157 A1 ist eine Scheibenwischvorrichtung mit einer Antriebsvorrichtung zum Antrieb eines Wischarms bekannt, wobei die Antriebsvorrichtung über eine Befestigungsvorrichtung an der Fahrzeugkarosserie befestigt ist. Die Befestigungsvorrichtung ist als ein Befestigungsmittel mit einem Doppelkonus ausgeführt, der in eine entsprechend geformte Ausnehmung in einem gummielastischen Halteelement aufgenommen ist, wobei der Doppelkonus an einem Karosserieabschnitt befestigt und das gummielastische Halteelement an einem Trägerrohr der Scheibenwischvorrichtung angeordnet ist, an dem auch der Antriebsmotor gehalten ist. Auf Grund der Doppelkonusform ist in beide Achsrichtungen eine formschlüssige Verbindung mit dem gummielastischen Halteelement gegeben.

Diese Aufgabe wird erfindungsgemäß mit den Merkmalen der Ansprüche 1, 5 und 11 gelöst. Die Unteransprüche geben zweckmäßige Weiterbildungen an.

Die Scheibenwischvorrichtung wird an der Fahrzeugkarosserie befestigt und dient zum Antrieb eines auf einer Fahrzeugscheibe aufliegenden Wischarms, der von einer Antriebsvorrichtung, welche Bestandteil der Scheibenwischvorrichtung ist, in eine pendelnde Drehbewegung versetzt wird. Als Antriebsvorrichtung kommt eine Motor-Getriebe-Einheit in Betracht, die einen elektrischen Antriebsmotor umfasst, dessen Drehbewegung über Getriebeteile auf eine Abtriebswelle der Motorgetriebeeinheit übertragen wird. Die Abtriebswelle ist in einer bevorzugten Ausführung der Scheibenwischvorrichtung als Wischerdirektantrieb ausgeführt und unmittelbar mit dem Wischarm gekoppelt und versetzt diesen in die Wischbewegung. Gemäß einer alternativen Ausführung ist es auch möglich, ein Wischergestänge zwischen Abtriebswelle und Wischarm vorzusehen.

Die Antriebsvorrichtung, bestehend aus der Motor-Getriebe-Einheit, ist mithilfe einer Befestigungsvorrichtung an der Fahrzeugkarosserie befestigt, welche erfindungsgemäß ein Rast- bzw. Klemmverbindungsglied umfasst, das bezogen auf die Montage- und Demontagerichtung die Antriebsvorrichtung mit Formschluss bzw. Reibschluss in der montierten Position in der Fahrzeugkarosserie hält. Das Rast- bzw. Klemmverbindungsglied kann insbesondere ohne Montagewerkzeug in die Verbindungsstellung gebracht werden, wodurch die Montage der Antriebsvorrichtung an der Fahrzeugkarosserie erheblich vereinfacht wird. Da entgegen der Montagerichtung, also in Demontagerichtung, ein Form- bzw. Reibschluss besteht, ist die Antriebsvorrichtung mit hinreichender Sicherheit an der Fahrzeugkarosserie gehalten. Der Form- bzw. Reibschluss wird ausreichend groß gewählt, um die im üblichen Fahrtbetrieb auftretenden mechanischen Belastungen wie Schwingungen und Stöße sowie Witterungseinflüsse ohne Beeinträchtigung der Verbindung überstehen zu können. Weitere Befestigungsmaßnahmen sind für die Anordnung der Antriebsvorrichtung an der Fahrzeugkarosserie grundsätzlich nicht erforderlich. Derartige zusätzliche Befestigungsmaßnahmen können zwar ggf. vorgesehen sein, grundsätzlich ist es aber ausreichend, die Befestigung ausschließlich mithilfe des Rast- bzw. Klemmverbindungsgliedes mit Form- bzw. Reibschluss durchzuführen.

Gemäß eines weiteren Aspektes der Erfindung weist die Befestigungsvorrichtung außerdem ein Schwingungsentkopplungselement auf, das im Verbindungsweg zwischen der Antriebsvorrichtung und der Fahrzeugkarosserie angeordnet ist. Das Schwingungsentkopplungselement, beispielsweise ein Dämpfungselement aus Gummi oder ein Metalleinleger, hat die Funktion, Schwingungen zu dämpfen und dadurch eine Schwingungsentkopplung oder zumindest eine Schwingungsreduzierung zwischen Antriebsvorrichtung der Scheibenwischvorrichtung und Fahrzeugkarosserie zu erreichen. Insbesondere vom Wischermotor ausgehende Vibrationen und Schwingungen werden nicht oder nur in sehr reduziertem Maße auf die Fahrzeugkarosserie übertragen. Auch in Gegenrichtung dient das Schwingungsentkopplungselement zur Schwingungsreduzierung, so dass vom Fahrwerk ausgehende Stöße oder Vibrationen des Fahrzeugmotors, die sich auch in die Fahrzeugkarosserie fortsetzen, nicht oder nur in sehr reduziertem Maße auf die Antriebsvorrichtung der Scheibenwischvorrichtung übertragen werden. Dadurch ist für einen langen Betriebszeitraum eine sichere mechanische Verbindung der Antriebsvorrichtung an der Fahrzeugkarosserie gewährleistet, auch wenn dies lediglich mit einem Reib- bzw. Kraftschluss und ohne zusätzliche Befestigungsmaßnahmen wie Verschraubungen, Vernietungen oder dergleichen erfolgt. Außerdem ist die Geräuschbelastung reduziert.

Es kommen verschiedene Ausführungen für das Rast- bzw. Klemmverbindungselement in Betracht. Möglich ist zum einen eine einteilige Ausführung des Rast- bzw. Klemmverbindungselementes mit der Fahrzeugkarosserie, wobei in diesem Fall die Rast- bzw. Klemmverbindung zur Antriebsvorrichtung bzw. zu einem mit der Antriebsvorrichtung verbundenen Bauteil erfolgt, insbesondere einem Gehäuse der Antriebsvorrichtung. Umgekehrt ist es auch möglich, das Rast- bzw. Klemmverbindungselement einteilig mit dem Gehäuse der Antriebsvorrichtung auszubilden, wobei in diesem Fall die Rast- bzw. Klemmverbindung form- bzw. reibschlüssig an der Fahrzeugkarosserie oder einem mit der Fahrzeugkarosserie verbundenen Bauteil anliegt. Schließlich ist es auch möglich, das Rast- bzw. Klemmverbindungsglied als separates Bauteil auszubilden, wobei zumindest eine der Verbindungen zur Fahrzeugkarosserie bzw. zur Antriebsvorrichtung mit Form- bzw. Reibschluss erfolgt, damit in Montagerichtung ein einfaches Einstecken für die Montage der Antriebsvorrichtung ausreicht. Grundsätzlich ist es darüber hinaus möglich, die Verbindung zu dem jeweils anderen Bauteil ebenfalls mit Form- bzw. Reibschluss durchzuführen, wobei dies nicht zwingend erforderlich ist, sondern ggf. auch über sonstige Befestigungsmaßnahmen wie Verschraubungen, Niete oder Verkleben erfolgen kann.

Gemäß einer weiteren zweckmäßigen Ausführung weist das Rast- bzw. Klemmverbindungsglied einen Rasthaken auf, der mit einer zugeordneten Rastausnehmung in eine formschlüssige Rastverbindung zu verbringen ist. Der Rasthaken ist insbesondere elastisch an einem Grundkörper des Rast- bzw. Klemmverbindungsglieds angeordnet und steht im unbelasteten Zustand winklig vom Grundkörper ab, wobei zum Herstellen der Rastverbindung der Rasthaken durch die schmaler ausgeführte Rastausnehmung geführt wird, woraufhin der Rasthaken sich elastisch in Richtung des Grundkörpers anlegt. Nachdem der Rasthaken vollständig durch die Rastausnehmung hindurchgeführt ist, nimmt der Rasthaken durch seine Eigenelastizität wieder seine ursprüngliche, winklig zum Grundkörper abstehende Position ein, wodurch der Formschluss zwischen dem Rasthaken und dem die Rastaufnehmung aufweisenden Bauteil hergestellt ist und ein unerwünschtes Lösen der Verbindung durch das Abstehen des Rasthakens sicher verhindert ist.

Zur Realisierung eines Reibschlusses weist das Rast- bzw. Klemmverbindungsglied vorteilhafterweise einen Klemmvorsprung auf, der in der montierten Position der Antriebsvorrichtung eine Klemmkraft auf eine zugeordnete Klemmfläche ausübt. Dies erfolgt beispielsweise nach Art des Speednut-Prinzips, indem der Klemmvorsprung wie eine Lasche einer Speednut in einem spitzen Winkel zur Demontagerichtung an der zugeordneten Klemmfläche anliegt und diese mit einer radialen und einer axialen Kraftkomponente beaufschlagt. Auf Grund des spitzen Winkels gräbt sich der Klemmvorsprung in die Klemmfläche ein, sobald sich die Antriebsvorrichtung in die Demontagerichtung bewegt. Hierdurch entstehen zusätzliche, sehr hohe Klemmkräfte, die ein unerwünschtes Lösen der Antriebsvorrichtung von der Fahrzeugkarosserie sicher verhindern.

Gemäß bevorzugter Ausführung bildet die Außenseite des Gehäuses der Antriebsvorrichtung die Klemmfläche, an der in der montierten Position der Klemmvorsprung des Rast- bzw. Klemmverbindungsgliedes anliegt. Grundsätzlich möglich ist aber auch die umgekehrte Ausführung, gemäß der der Klemmvorsprung an dem Gehäuse der Antriebsvorrichtung angeordnet ist und sich die Klemmfläche an der Fahrzeugkarosserie oder einem mit der Fahrzeugkarosserie verbundenen Bauteil befindet.

Der Klemmvorsprung ist zweckmäßigerweise wie die Ausführung des Rast- bzw. Klemmverbindungsgliedes mit dem Rasthaken verschwenkbar an einem Grundkörper bzw. Stützabschnitt des Rast- bzw. Klemmverbindungsgliedes gehalten, um eine Relativbewegung zu ermöglichen. Im Falle des Rasthakens ist dieser jedoch in der montierten Position kräftefrei, wohingegen der Klemmvorsprung in der montierten Position insbesondere auf Grund seiner Eigenelastizität mit einer Klemmkraft seitlich an der Klemmfläche anliegt.

Im Falle einer Ausführung des Rast- bzw. Klemmverbindungsgliedes als von der Antriebsvorrichtung unabhängiges, separates Bauteil ist es zweckmäßig, dass das Rast- bzw. Klemmverbindungsglied einen Stützabschnitt aufweist, welcher die Einschub- bzw. Montagerichtung der Antriebsvorrichtung begrenzt. Der Stützabschnitt des Rast- bzw. Klemmverbindungsgliedes bildet somit einen Anschlag für das Gehäuse der Antriebsvorrichtung. Diese Ausführung kann sowohl mit der Ausbildung als Rasthaken als auch mit der Ausbildung als Klemmvorsprung kombiniert werden.

Das Schwingungsentkopplungselement kann entweder mit der Antriebsvorrichtung, insbesondere dem Gehäuse der Antriebsvorrichtung, mit der Fahrzeugkarosserie oder unmittelbar mit dem Rast- bzw. Klemmverbindungsglied verbunden werden. Wesentlich hierbei ist, dass das Schwingungsentkopplungselement im Übertragungs- bzw. Verbindungsweg zwischen der Antriebsvorrichtung bzw. der Fahrzeugkarosserie liegt, so dass ein unmittelbarer, durchgreifender Kontakt zwischen Fahrzeugkarosserie, Rast- bzw. Klemmverbindungsglied und Antriebsvorrichtung vermieden wird.

Gemäß einer weiteren zweckmäßigen Ausführung ist an dem Rast- bzw. Klemmverbindungsglied eine Rampe angeformt, an der während der Montage ein Abschnitt der Karosserie oder der Antriebsvorrichtung bis zum Erreichen der formschlüssigen oder reibschlüssigen Position entlang gleitet. Die Rampe führt insbesondere zu einer Aufnahmenut im Rast- bzw. Klemmverbindungsglied, in der in der montierten Position der Abschnitt der Fahrzeugkarosserie bzw. der Antriebsvorrichtung aufgenommen ist, welcher bis zum Erreichen der Aufnahmenut an der Rampe entlang gleitet. Die Rampe vereinfacht die Montage erheblich, außerdem sorgt die Rampe für einen gleichmäßigen Kraftaufbau in Querrichtung, also quer zur Montagerichtung, wodurch insbesondere ein Abschnitt des Rast- bzw. Klemmverbindungsgliedes in Querrichtung elastisch ausweichen kann, so dass der Abschnitt der Fahrzeugkarosserie bzw. der Antriebsvorrichtung die Aufnahmenut in dem Rast- bzw. Klemmverbindungsglied erreichen kann. Nach dem Erreichen der Aufnahmenut schnappt das Rast- bzw. Klemmverbindungsglied wieder in seine Ausgangsstellung zurück, woraufhin der in der Aufnahmenut aufgenommen Abschnitt festgeklemmt ist.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Scheibenwischvorrichtung für ein Kraftfahrzeug,
- Fig. 2: eine schematische Darstellung einer Antriebsvorrichtung, bestehend aus einem elektrischen Antriebsmotor und einer Getriebeeinheit,
- Fig. 3: die Antriebsvorrichtung in montierter Position in der Fahrzeugkarosserie, wobei die Montage mithilfe einer Befestigungsvorrichtung erfolgt, die ein Rast- bzw. Klemmverbindungsglied und ein Schwingungsentkopplungselement umfasst,
- Fig. 4: in Draufsicht die Antriebsvorrichtung mit eingezeichneten Ausnehmungen im Gehäuse zur Aufnahme der Rast- bzw. Klemmverbindungsglieder,
- Fig. 5: eine Antriebsvorrichtung in der Fahrzeugkarosserie in einer weiteren Ausführung,
- Fig. 6: in Draufsicht die Fahrzeugkarosserie mit der Kontur zur Aufnahme der Antriebsvorrichtung,
- Fig. 7: ein weiteres Ausführungsbeispiel einer Antriebsvorrichtung, die in der Fahrzeugkarosserie aufgenommen ist,
- Fig. 8: ein weiteres Ausführungsbeispiel,
- Fig. 9: in schematischer Darstellung Rast- bzw. Klemmverbindungsglieder an der Kontur der Fahrzeugkarosserie, wobei die Rast- bzw. Klemmverbindungsglieder einen winkligen Klemmvorsprung aufweisen, welcher in Montageposition an der Außenseite des Gehäuses der Antriebsvorrichtung anliegt,
- Fig. 10: die Antriebsvorrichtung in der Fahrzeugkarosserie mit den Rast- bzw. Klemmverbindungsgliedern gemäß Fig. 9,
- Fig. 11: eine ähnliche Ausführung wie Fig. 10, jedoch mit zusätzlichen Schrauben, über die das Rast- bzw. Klemmverbindungsglied mit der Fahrzeugkarosserie verbunden ist,
- Fig. 12: eine Draufsicht auf die Antriebsvorrichtung in der montierten Position, mit einem die Kontur der Antriebsvorrichtung teilweise umgreifenden Einschubrahmen, welcher über Schrauben an der Fahrzeugkarosserie gehalten ist,
- Fig. 13: eine Fig. 12 entsprechende Darstellung, jedoch mit einem Einschubrahmen, der die Kontur der Antriebsvorrichtung vollständig umschließt,
- Fig. 14: eine Antriebsvorrichtung in montierter Lage in der Fahrzeugkarosserie in einer weiteren Ausführung,
- Fig. 15: ein weiteres Ausführungsbeispiel,
- Fig. 16: ein weiteres Ausführungsbeispiel, bei dem das Rast- bzw. Klemmverbindungsglied als separates Bauteil ausgeführt ist, welches sowohl mit dem Gehäuse der Antriebsvorrichtung als auch mit der Fahrzeugkarosserie formschlüssig verbunden ist,
- Fig. 17: das Rast- bzw. Klemmverbindungsglied aus Fig. 16 in einer Ansicht von vorne,
- Fig. 18: das Rast- bzw. Klemmverbindungsglied aus Fig. 16 in Draufsicht,
- Fig. 19: ein weiteres Ausführungsbeispiel, bei dem ein als separates Bauteil ausgeführtes Rast- bzw. Klemmverbindungsglied formschlüssig mit der Fahrzeugkarosserie und über Schrauben mit dem Gehäuse der Antriebsvorrichtung verbunden ist.

In den Figuren sind gleiche Bauteile mit gleichen Bezugszeichen versehen.

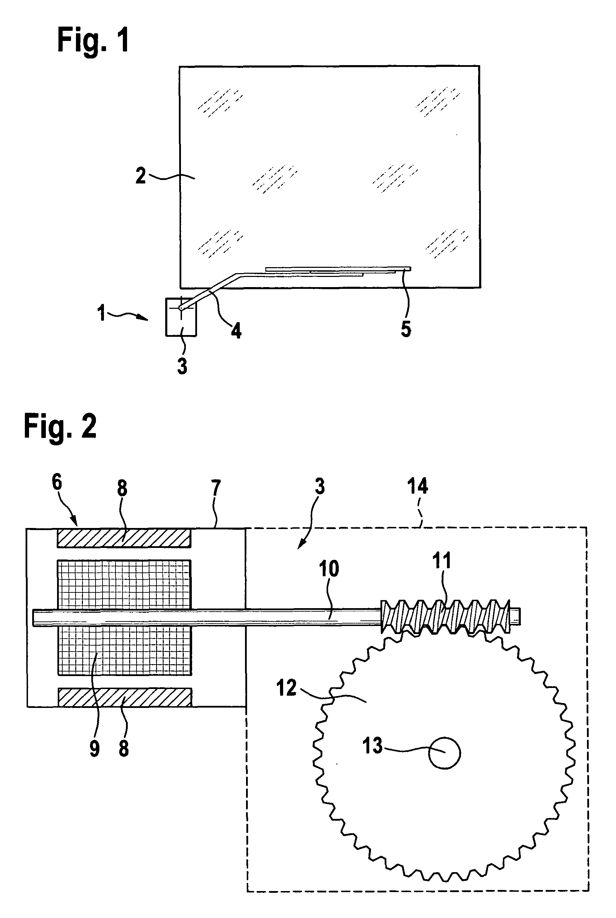

Fig. 1 zeigt eine Scheibenwischvorrichtung 1 für ein Kraftfahrzeug, die eine Antriebsvorrichtung 3 umfasst sowie einen von der Antriebsvorrichtung 3 betätigten Wischarm und ein am Wischarm 4 gehaltenes Wischblatt 5, das auf einer Fahrzeugscheibe 2 aufliegt. Der Antriebsmotor ist als Elektromotor ausgeführt. Der Wischarm 4 ist drehbar gelagert und führt bei einer Betätigung des elektrischen Antriebsmotors eine rotatorische Pendelbewegung aus.

Wie Fig. 2 zu entnehmen, umfasst die Antriebsvorrichtung 3 den elektrischen Antriebsmotor 6 sowie eine Getriebeeinheit in einem Getriebegehäuse 14, das fest mit dem Stator- bzw. Motorgehäuse 7 des elektrischen Antriebsmotors 6 verbunden ist. In dem Statorgehäuse 7 ist eine Rotor- bzw. Ankerwelle 10 drehbar gelagert, die Träger einer Spule 9 ist, welche über einen Kommutator bestrombar ist. Auf der Innenseite des Gehäuses 7 sind Permanentmagnete 8 befestigt.

Die Ankerwelle 10 trägt auf ihrem außerhalb des Statorgehäuses 7 gelegenen Wellenabschnitt, welcher in das Getriebegehäuse 14 einragt, ein Gewinde 11, das mit einem Zahnrad 12 kämmt, welches auf einer Abtriebswelle 13 drehfest angeordnet ist. Das Gewinde 11 und das Zahnrad 12 bilden hierbei gemeinsam mit der Abtriebswelle 13 das im Getriebegehäuse 14 angeordnete Getriebe. Die Abtriebswelle 13 treibt zweckmäßigerweise unmittelbar den Wischarm 4 an (Fig. 1).

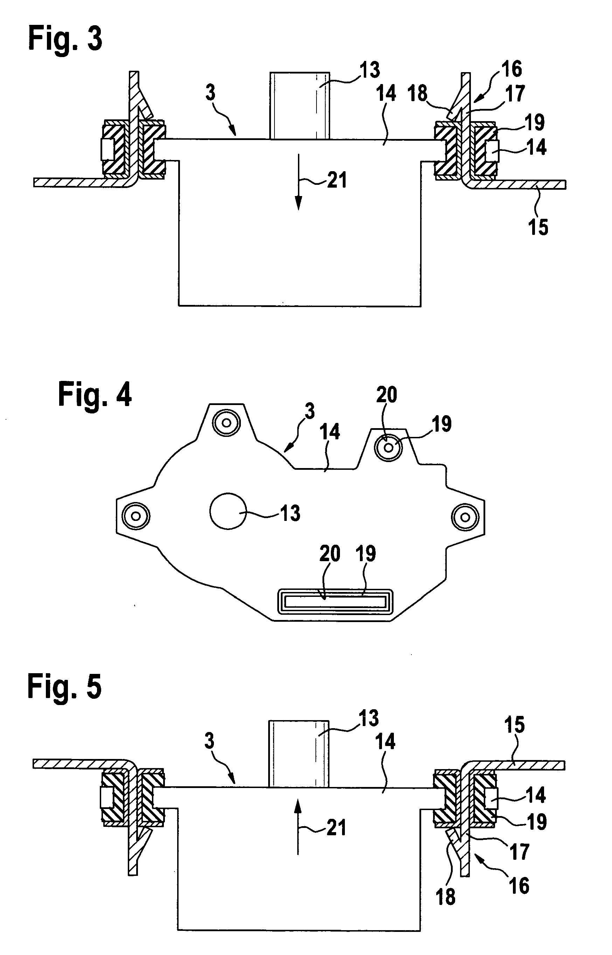

In Fig. 3 ist ein erstes Ausführungsbeispiel für die Verbindung einer Antriebsvorrichtung 3 mit der Fahrzeugkarosserie 15 des Fahrzeugs dargestellt. Das Gehäuse 14 der Antriebsvorrichtung 3 ist mithilfe eines Rast- bzw. Klemmverbindungsglieds 16 mit der Fahrzeugkarosserie 15 verbunden, wobei im Ausführungsbeispiel das Rast- bzw. Klemmverbindungsglied 16 einteilig mit der Fahrzeugkarosserie ausgeführt ist. Das Rast- bzw. Klemmverbindungsglied 16 weist einen gegenüber der Ebene der Fahrzeugkarosserie 15 aufgebogenen Einführabschnitt 17 auf, der eine Ausnehmung in der Fahrzeugkarosserie 15 zur Aufnahme der Antriebsvorrichtung 3 begrenzt. An dem Einführabschnitt 17 ist ein Rasthaken 18 einstückig angeformt, der in der montierten Position gemäß Fig. 3 in einem spitzen Winkel gegenüber dem Einführabschnitt 17 absteht und der Öffnung in der Fahrzeugkarosserie zugewandt ist, die zur Aufnahme der Antriebsvorrichtung 3 dient.

Des Weiteren ist ein Schwingungsentkopplungselement 19 vorgesehen, welches beispielsweise als Ring ausgebildet ist und eine an die Kontur des abgewinkelten Einführabschnittes 17 angepasste Ausnehmung aufweist. Das Schwingungsentkopplungselement 19 ist auf den Einführabschnitt 17 des Rast- bzw. Verbindungsglieds 16 aufgesteckt, wobei der Rasthaken 18 durch die Ausnehmung im Schwingungsentkopplungselement 19 hindurchgeführt ist. Die Ausnehmung im Schwingungsentkopplungselement 19 ist kleiner ausgeführt als die Einhüllende um den Rasthaken 18, so dass ein Hindurchstecken des Rasthakens 18 durch die Ausnehmung im Schwingungsentkopplungselement 19 nur möglich ist, wenn der Rasthaken 18 auf Grund seiner Eigenelastizität sich in Richtung des Einführabschnittes 17 anlegt. Nachdem der Rasthaken durch die Ausnehmung im Schwingungsentkopplungselement 19 hindurchgeführt wurde, kann der Rasthaken durch seine Eigenelastizität wieder in seine Ausgangsposition zurückverschwenken, wodurch ein sicherer Formschluss zwischen der freien Stirnseite des Rasthakens 18 und dem Schwingungsentkopplungselement 19 gegeben ist.

Das Schwingungsentkopplungselement 19 ist zugleich auf das Gehäuse 14 der Antriebsvorrichtung 3 aufgesteckt, welches ebenfalls eine Ausnehmung aufweist, mit der die Ausnehmung im Schwingungsentkopplungselement 19 in koaxiale Ausrichtung gebracht wird, so dass das Rast- bzw. Klemmverbindungsglied 16 durch die gemeinsame Ausnehmung im Gehäuse 14 und im Schwingungsentkopplungselement 19 hindurchgeführt werden kann. In der Rastposition ist damit auch ein Formschluss zwischen dem Rast- bzw. Klemmverbindungsglied 16 und der Antriebsvorrichtung 3 realisiert, so dass diese sicher an der Fahrzeugkarosserie 15 gehalten ist.

Die Montagerichtung zur Montage der Antriebsvorrichtung 3 in die Fahrzeugkarosserie 15 ist mit Bezugszeichen 21 gekennzeichnet. Entsprechend liegt die Demontagerichtung entgegengesetzt zum Pfeil 21.

In Fig. 4 ist eine Draufsicht auf die Antriebsvorrichtung 3 dargestellt. Zu erkennen ist, dass in das Gehäuse 14 der Antriebsvorrichtung 3 über den Umfang verteilt benachbart zur Außenkontur eine Mehrzahl von Ausnehmungen 20 eingebracht ist, die zur Aufnahme der Schwingungsentkopplungselemente 19 dienen. Die Ausnehmungen 20 im Gehäuse 14 können entweder kreisrund sein oder auch, wie im unteren Bildteil von Fig. 4 dargestellt, eine Längserstreckung aufweisen.

Das Ausführungsbeispiel gemäß Fig. 5 entspricht im Wesentlichen demjenigen nach Fig. 3, jedoch mit dem Unterschied, dass gemäß Fig. 5 das Rast- bzw. Klemmverbindungsglied 16 nach unten gerichtet ist, wohingegen im Ausführungsbeispiel nach Fig. 3 das Rast- bzw. Klemmverbindungselement nach oben weist. In beiden Fällen ist der Einführabschnitt 17 der Montagerichtung 21 entgegen gesetzt.

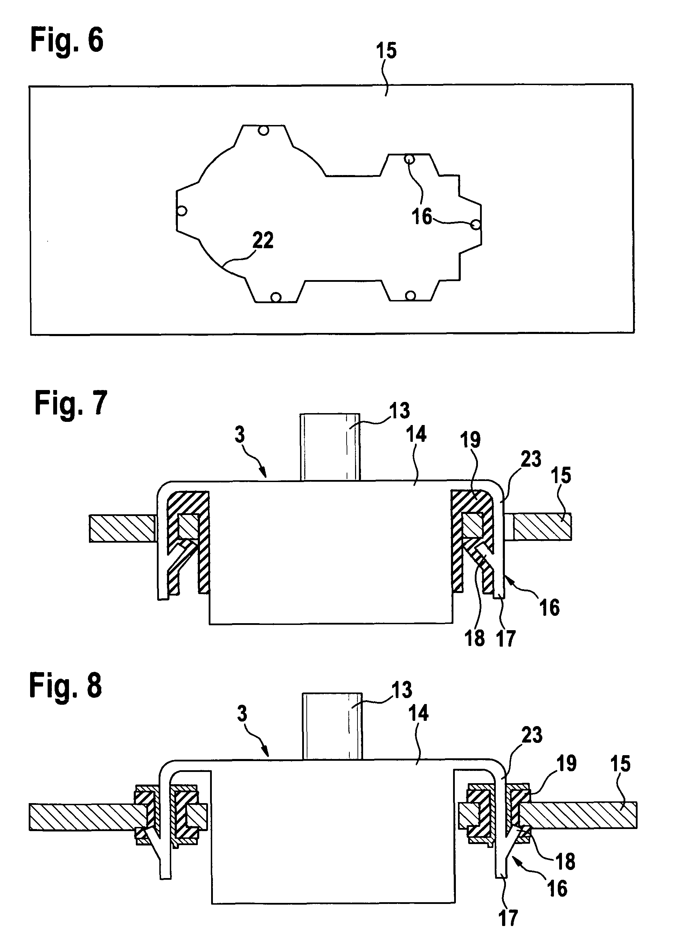

In Fig. 6 ist eine Draufsicht auf die Fahrzeugkarosserie 15 dargestellt, in die die Ausnehmung 22 zur Aufnahme der Antriebsvorrichtung eingebracht ist. Symbolisch sind in Vertiefungen in der Ausnehmung 22 Rast- bzw. Klemmverbindungsglieder 16 eingetragen, über die der Formschluss bzw. Reibschluss mit dem Gehäuse der Antriebsvorrichtung herzustellen ist.

In den Ausführungsbeispielen gemäß den Figuren 7 und 8 ist das Rast- bzw. Klemmverbindungsglied 16 einteilig mit dem Gehäuse 14 der Antriebsvorrichtung 3 ausgebildet. In beiden Fällen befindet sich der Einführabschnitt 17 des Rast- bzw. Klemmverbindungsgliedes 16 an einem seitlich auskragenden Gehäuseabschnitt 23 am Gehäuse 14 der Antriebsvorrichtung 3. Im Ausführungsbeispiel gemäß Fig. 7 erstreckt sich der Rasthaken 18 zur Gehäuseseite hin in einen Zwischenraum, welcher von der Gehäuseaußenseite des Gehäuses 3 und dem parallel hierzu verlaufenden Gehäuseabschnitt 23 gebildet ist. In diesen Zwischenraum ist auch das Schwingungsentkopplungselement 19 eingesetzt.

Im Ausführungsbeispiel gemäß Fig. 8 liegt dagegen der Rasthaken 18 des Rast- bzw. Klemmverbindungsgliedes 16 auf der dem Zwischenraum bzw. der Gehäuseaußenseite abgewandten Seite des Gehäuseabschnittes 23. Das Schwingungsentkopplungselement 19 ist im Beispiel nach Fig. 8 in gleicher Weise wie bei den Ausführungsbeispielen nach Fig. 3 und 5 als Ring ausgebildet. Dagegen weist das Schwingungsentkopplungselement 19 im Ausführungsbeispiel nach Fig. 7 im Querschnitt näherungsweise U-Form auf.

Es kann zweckmäßig sein, in die Schwingungsentkopplungselemente 19 eine zusätzliche Ausnehmung zur Aufnahme des Rasthakens 18 in der Montageposition einzubringen.

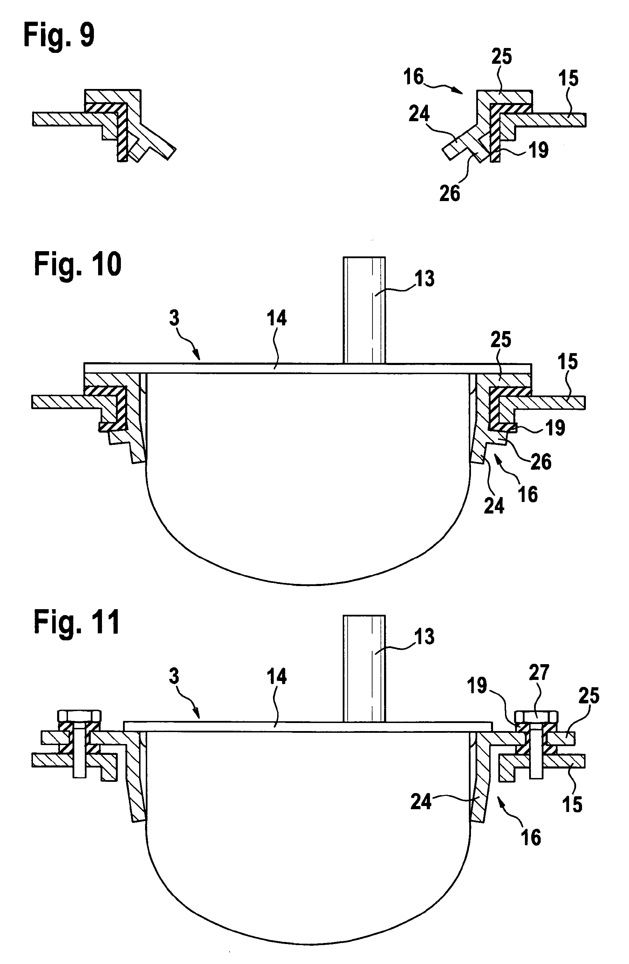

In den Ausführungsbeispielen gemäß den Figuren 9 bis 11 ist eine alternative Ausführung eines Rast- bzw. Klemmverbindungsglieds 16 dargestellt, bei der dieses Bauteil separat von der Fahrzeugkarosserie 15 und dem Gehäuse 14 der Antriebsvorrichtung 3 ausgebildet ist und das Gehäuse 14 mit Reibschluss bzw. einer Klemmkraft in der montierten Position in der Fahrzeugkarosserie hält. Das Rast- bzw. Klemmverbindungsglied 16 besteht aus einem Klemmvorsprung 24, der in der montierten Position (Fig. 10, Fig. 11) reib- bzw. kraftschlüssig an der Außenseite des Gehäuses 14 anliegt. Der Klemmvorsprung 24 ist einteilig mit einem winkelförmigen Stützabschnitt 25 des Rast- bzw. Klemmverbindungsglieds 16 ausgebildet und kann gegenüber dem Stützabschnitt 25 eine Schwenkbewegung ausführen. Zweckmäßigerweise befindet sich der Klemmvorsprung 24 wie in Fig. 9 dargestellt in der unbelasteten Position, also vor der Montage, aufgrund seiner Eigenelastizität in einer gegenüber dem Stützabschnitt 25 verhältnismäßig stark abgewinkelten Lage. Mit dem Einführen des Gehäuses 14 der Antriebsvorrichtung 3 in die Ausnehmung in der Fahrzeugkarosserie 15 gelangt die Außenseite des Gehäuses 14 in Kontakt mit dem Klemmvorsprung 24 und drückt diesen entgegen gesetzt zu dessen eigenelastischer Auslenkung in eine Lage, in der der Klemmvorsprung 24 nur noch einen kleinen Winkel mit dem nach unten weisenden Schenkel des winkelförmigen Stützabschnitts 25 einnimmt. Dementsprechend liegt die Außenkante des Klemmvorsprungs 24 mit einem kleinen Winkel an der Außenfläche des Gehäuses 14 der Antriebsvorrichtung 3 an. Bei einer Demontagebewegung der Antriebsvorrichtung 3 aus dem Sitz in der Fahrzeugkarosserie 15 heraus gräbt sich die Außenkante des Klemmvorsprungs 24 in die Außenfläche des Gehäuses 14 ein, wodurch eine weitere Demontagebewegung wirkungsvoll verhindert ist.

Der Stützabschnitt 25 des Rast- bzw. Klemmverbindungsglieds ist winkelförmig ausgebildet und besteht aus zwei in einem 90°-Winkel zueinander angeordneten Schenkeln, von denen der horizontale Schenkel am Randbereich der Fahrzeugkarosserie 15 aufliegt und zugleich eine Stützfläche für das Gehäuse 14 der Antriebsvorrichtung 3 bildet, das einen radial überstehenden Randbereich aufweist. An dem nach unten ragenden Schenkel des Stützabschnitts 25 ist der Klemmvorsprung 25 einstückig angeformt, der jedoch, wie vorbeschrieben, gegenüber dem nach unten ragenden Schenkel verschwenkbar ausgebildet ist.

An dem Klemmvorsprung 24 ist außerdem ein Fixierhaken 26 angeformt, der auf der der Antriebsvorrichtung gegenüberliegenden Seite einstückig mit dem Klemmvorsprung 24 verbunden ist und radial nach außen weist. Vor der Montage der Antriebsvorrichtung 3 liegt der Fixierhaken 26, wie Fig. 9 zu entnehmen, auf Grund der winkligen Position des Klemmvorsprungs 24 in einer schräg nach unten gerichteten Lage, in der das ebenfalls winkelförmig ausgebildete Schwingungsentkopplungselement, welches direkt am Randbereich der Fahrzeugkarosserie 15 aufliegt und von dem Stützabschnitt 25 fixiert wird, noch unbeeinflusst vom Fixierhaken 26 ist. In der montierten Position der Antriebsvorrichtung 3 dagegen (Fig. 10) wird der Fixierhaken 26 unter die Unterseite des Randbereichs der Fahrzeugkarosserie 15 gedrückt und beaufschlagt hierbei einen Abschnitt des Schwingungsentkopplungselementes 19 in der Weise, dass dieser Abschnitt ebenfalls unter die Unterseite der Fahrzeugkarosserie verschwenkt wird. Hierdurch wird zum einen eine sichere Fixierung des Schwingungsentkopplungselementes an der Fahrzeugkarosserie 15 erreicht. Zum andern wird auch das Rast- bzw. Klemmverbindungselement 16 formschlüssig und damit unverlierbar an der Fahrzeugkarosserie 15 gesichert.

Auch im Ausführungsbeispiel gemäß Fig. 11 ist das Rast- bzw. Klemmverbindungsglied mit einem Klemmvorsprung 24 und einem Stützabschnitt 25 versehen, wobei der Klemmvorsprung 24 gegenüber dem nach unten ragenden Schenkel des Stützabschnitts 25 eine Schwenkbewegung ausführen kann. In der dargestellten Montageposition liegt die Außenkante des Klemmvorsprungs 24 mit Reibschluss bzw. Klemmkraft an der Außenfläche des Gehäuses 14 der Antriebsvorrichtung 3 an. Ein Fixierhaken wie beim vorhergehenden Ausführungsbeispiel ist jedoch nicht vorgesehen.

Die Fixierung des Rast- bzw. Klemmverbindungsgliedes 16 an der Fahrzeugkarosserie 16 erfolgt mithilfe einer Befestigungsmittels 27, beispielsweise einer Schraube oder einem Niet, wobei das Schwingungsentkopplungselement 19 unmittelbar von dem Befestigungsmittel 27 an der Fahrzeugkarosserie 15 gehalten ist. Das Schwingungsentkopplungselement 19 ist vorzugsweise ringförmig ausgeführt, es kann beispielsweise in Form einer oder zweier Unterlegscheiben ausgebildet sein, die aus einem schwingungsdämpfenden Material bestehen und an der Oberseite und/oder der Unterseite des horizontalen Schenkels des Stützabschnitts 25 des Rast- bzw. Klemmverbindungsgliedes 16 angeordnet sind. In dieser Ausführung kann auf den Fixierhaken 26 am Klemmvorsprung 24 verzichtet werden, da die feste Verbindung des Rast- bzw. Klemmverbindungsgliedes 16 sowie des Schwingungsentkopplungselementes 19 an der Fahrzeugkarosserie 19 mithilfe des Befestigungsmittels 27 erfolgt.

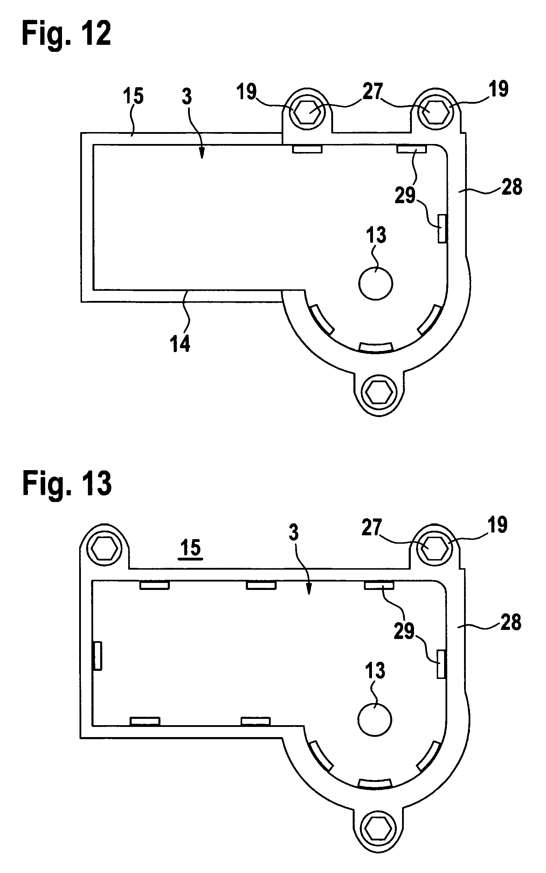

In den Figuren 12 und 13 ist jeweils eine Draufsicht auf eine in der Fahrzeugkarosserie 15 montierte Antriebsvorrichtung 3 dargestellt. Die Montage erfolgt mithilfe eines Einschubrahmens 28, der im Ausführungsbeispiel gemäß Fig. 12 die Kontur des Gehäuses 14 der Antriebsvorrichtung 3 nur teilweise einfasst, im Ausführungsbeispiel gemäß Fig. 13 jedoch das Gehäuse 14 vollständig umschließt. An dem Einschubrahmen 28, der in die Ausnehmung in der Fahrzeugkarosserie 15 eingesetzt wird und mit den Randbereichen der Fahrzeugkarosserie über Befestigungsmittel 27 verbunden ist, befinden sich die Rast- bzw. Klemmverbindungsglieder, mit denen die Antriebsvorrichtung 3 mit Rast- oder Reibschluss gehalten ist. Zudem sind am Einschubrahmen 28 die Schwingungsentkopplungselemente 19 gehalten, und zwar im gezeigten Ausführungsbeispiel an den Befestigungsmitteln 27. Zweckmäßigerweise befinden sich über den Umfang des Einschubrahmens 28 verteilt eine Mehrzahl von Rast- bzw. Klemmverbindungsgliedern 16, um eine möglichst gleichmäßige Klemm- bzw. Reibkraft über den Umfang des Gehäuses verteilt auf die Antriebsvorrichtung auszuüben.

Benachbart zum Rand sind in das Gehäuse 14 der Antriebsvorrichtung 3 Demontageausnehmungen 29 eingebracht, wobei jede Demontageausnehmung 29 einem Rast- bzw. Klemmverbindungsglied 16 zugeordnet ist. Die Demontageausnehmungen 29 dienen zum Einstecken eines Demontagewerkzeugs, beispielsweise eines Keils oder eines Schiebers, mit dem der Rasthaken oder Klemmvorsprung des Rast- bzw. Klemmverbindungsglieds aus der Rastposition in eine Außerrastposition zurückverstellt werden kann, damit die Antriebsvorrichtung 3 aus ihrem Sitz in der Fahrzeugkarosserie 15 herausgenommen werden kann.

Die Montage, also das Einführen der Antriebsvorrichtung 3 in den Sitz in der Fahrzeugkarosserie 15, kann dagegen ohne Zuhilfenahme von Werkzeug erfolgen.

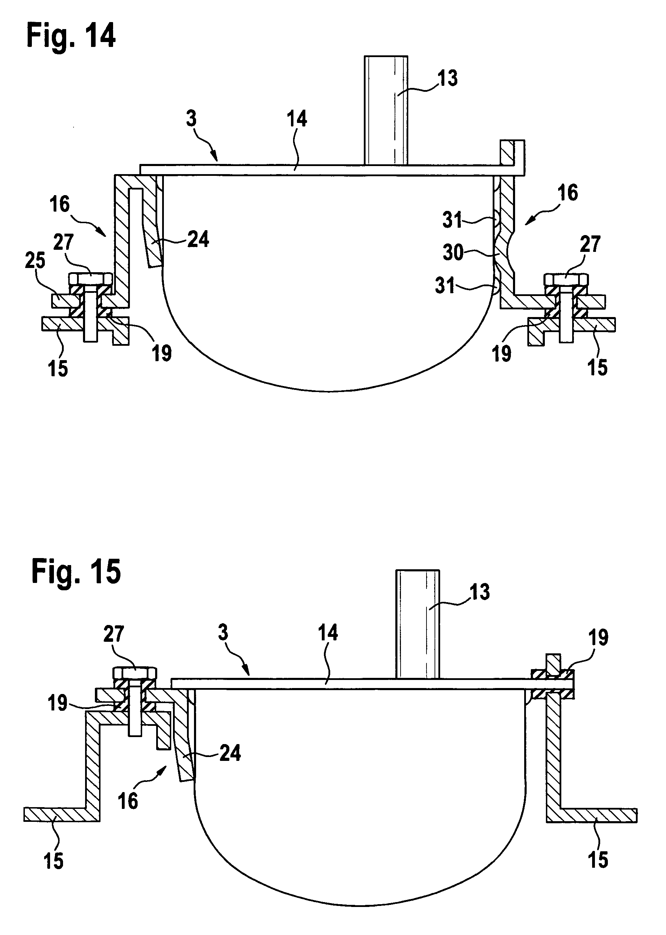

Im Ausführungsbeispiel gemäß Fig. 14 sind verschieden aufgebaute Rast- bzw. Klemmverbindungsglieder 16 an einer Antriebsvorrichtung 3 vorgesehen, die das Gehäuse 14 der Antriebsvorrichtung 3 im Sitz in der Fahrzeugkarosserie 15 sichern. In der linken Bildhälfte von Fig. 14 ist ein Rast- bzw. Klemmverbindungsglied 16 zu erkennen, das analog zu den Ausführungsbeispielen gemäß den Figuren 10 und 11 einen Klemmvorsprung 24 aufweist, der gegenüber dem Stützabschnitt 25 verschwenkbar ausgebildet ist und in der Montageposition mit einer Klemmkraft an der Außenfläche des Gehäuses 14 anliegt. Der Übergangsbereich zwischen Stützabschnitt 25, welcher mithilfe einer als Schraube oder Niet ausgeführten Befestigungsmittel 27 mit der Fahrzeugkarosserie 15 verbunden ist, und dem Klemmvorsprung 24 ist als zusätzlicher Winkelflansch ausgeführt, dergestalt, dass zwischen einem vertikalen Abschnitt des Winkelflansches und dem Klemmvorsprung 24 in der montierten Position ein Zwischenraum gebildet ist.

In der rechten Bildhälfte von Fig. 14 ist ein Rast- bzw. Klemmverbindungsglied 16 dargestellt, das mit einem der Außenseite des Gehäuses 14 zugewandten Rastnoppen 30 versehen ist, der in montierter Position an der Außenseite des Gehäuses 14 anliegt und diese mit einer Klemmkraft radial beaufschlagt. Ein zusätzlicher Formschluss in Montagerichtung kann dadurch erreicht werden, dass an dem Gehäuse 14 radial überstehende Gehäusenoppen 31 angeformt sind, zwischen denen der Rastnoppen 30 des Rast- bzw. Klemmverbindungsglieds 16 liegt.

Das Rast- bzw. Klemmverbindungsglied 16 ist winkelförmig ausgebildet, wobei der horizontale Schenkel des Rast- bzw. Klemmverbindungsglieds ebenfalls über ein Befestigungsmittel 27, eine Schraube oder ein Niet, mit der Fahrzeugkarosserie 15 verbunden ist. Das Befestigungsmittel 27 sichert zugleich das Schwingungsentkopplungselement 19 an der Fahrzeugkarosserie.

Auch im Ausführungsbeispiel gemäß Fig. 15 sind verschiedene Befestigungsmethoden zur Sicherung einer Antriebsvorrichtung 3 im Sitz in der Fahrzeugkarosserie 15 vorgesehen. Gemäß linker Bildhälfte von Fig. 15 befindet sich am Rand der Fahrzeugkarosserie ein winkelförmiges Rast- bzw. Klemmverbindungsglied 16, welches mit einem schwenkbar ausgebildeten Klemmvorsprung 24 versehen ist, der in montierter Position eine Klemmkraft auf das Gehäuse 14 der Antriebsvorrichtung 3 ausübt. Das Rast- bzw. Klemmverbindungsglied 16 ist über das Befestigungsmittel 27 mit der Fahrzeugkarosserie 15 verbunden, wobei das Befestigungsmittel 25 zugleich das Schwingungsentkopplungselement 19 an der Fahrzeugkarosserie sichert. Die Fahrzeugkarosserie ist im Randbereich mit einem erhöhten, umlaufenden Rand versehen, der im Querschnitt zumindest näherungsweise U-Form aufweist. An der radial nach innen weisenden Seitenfläche des Randbereichs der Fahrzeugkarosserie stützt sich der Klemmvorsprung 24 ab.

Auf der gegenüberliegenden Seite ist im Ausführungsbeispiel gemäß Fig. 15 der überstehende Randbereich des Gehäuses 14 unmittelbar mit der Fahrzeugkarosserie 15 verbunden. Zur Schwingungsentkopplung ist auch in diesem Bereich ein Schwingungsentkopplungselement 19 angeordnet.

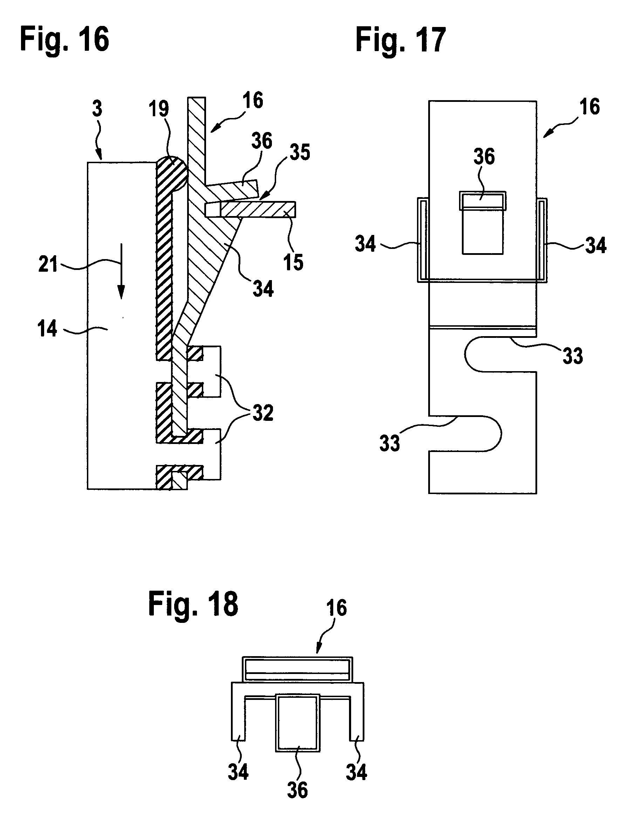

In dem in den Figuren 16 bis 18 dargestellten Ausführungsbeispiel ist das Rast- bzw. Klemmverbindungsglied 16 formschlüssig sowohl mit dem Gehäuse 14 der Antriebsvorrichtung 3 als auch mit der Fahrzeugkarosserie 3 verbunden. Zum Gehäuse 14 erfolgt der Formschluss mithilfe von Gehäuserastvorsprüngen 32, die an dem Gehäuse 14 angeformt sind und die übereinanderliegend angeordnet sind und sich in Querrichtung am Gehäuse erstrecken. Den Gehäuserastvorsprüngen 32 sind zwei zu gegenüberliegenden Seiten geöffnete Langlöcher 33 im Grundkörper des Rast- bzw. Klemmverbindungsglieds 16 zugeordnet (Fig. 17). Die Langlöcher 33 sind zu den Seitenflächen des Rast- bzw. Klemmverbindungsglieds 16 hin geöffnet, und zwar zu gegenüberliegenden Seitenflächen, was ein Einknöpfen des Rast- bzw. Klemmverbindungsgliedes 16 mittels einer Schwenkbewegung auf die Gehäuserastvorsprünge 32 am Gehäuse 14 ermöglicht. Zwischen dem Rast- bzw. Klemmverbindungsglied 16 und dem Gehäuse 14 ist das Schwingungsentkopplungselement 19 angeordnet, welches sich im Wesentlichen über die gleiche axiale Länge wie das Rast- bzw. Klemmverbindungsglied erstreckt.

Die formschlüssige Verbindung zur Fahrzeugkarosserie 15 erfolgt mithilfe einer Aufnahmenut 35 im Grundkörper des Rast- bzw. Klemmverbindungsglieds 16, wobei die Aufnahmenut 35 von einem darüberliegenden, seitlich auskragenden Vorsprung 36 des Rast- bzw. Klemmverbindungsglieds an einer Seite begrenzt ist. An der gegenüberliegenden Seite befindet sich eine Rampe 34, welche ebenfalls einstückig an dem Rast- bzw. Klemmverbindungsglied angeformt ist und die eine rampenförmige Gleitfläche für das Entlanggleiten des Randabschnittes der Fahrzeugkarosserie 15 in die Aufnahmenut 35 bildet. Zum Einführen der Antriebsvorrichtung 3 in den Sitz in der Fahrzeugkarosserie wird die Antriebsvorrichtung gemäß Pfeil 21 nach unten bewegt, bei dieser Bewegung gleitet der Rand der Fahrzeugkarosserie 15 an der Rampe 34 entlang und gelangt schließlich in Eingriff mit der Aufnahmenut 35. Da der Vorsprung 36 am Rast- bzw. Klemmverbindungsglied 16 seitlich mit größerer Erstreckung auskragt als die Rampe 34, wird der Randbereich der Fahrzeugkarosserie 15 sicher in der Aufnahmenut 35 fixiert.

Beim Entlanggleiten kann sich das Rast- bzw. Klemmverbindungsglied 16 auf Grund seiner Eigenelastizität geringfügig elastisch verformen.

Wie den Figuren 17 und 18 zu entnehmen, befindet sich an jedem Seitenbereich des Grundkörpers des Rast- bzw. Klemmverbindungsglieds 16 jeweils eine Rampe 34.

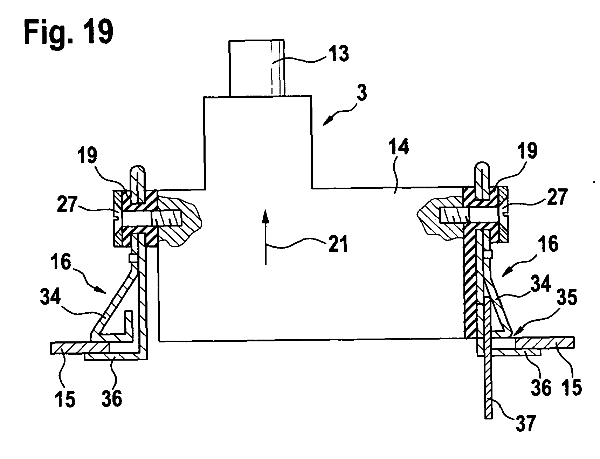

Im Ausführungsbeispiel gemäß Fig. 19 ist das Rast- bzw. Klemmverbindungsglied 16 über Befestigungsmittel 27 mit dem Gehäuse 14 der Antriebsvorrichtung 3 verbunden. Karosserieseitig erfolgt die Verbindung mit Formschluss, und zwar in entsprechender Weise wie beim vorhergehenden Ausführungsbeispiel. Das Rast- bzw. Klemmverbindungsglied 16 weist eine Rampe 34 auf, entlang der der Randbereich der Fahrzeugkarosserie 15 beim Einführen der Antriebsvorrichtung 3 in Pfeilrichtung 21 entlang gleitet, bis der Randbereich der Fahrzeugkarosserie in der Aufnahmenut 35 aufgenommen ist und von dem Vorsprung 36 begrenzt wird.

Eingetragen ist in Fig. 19 auch ein Demontagewerkzeug 37, welches dazu dient, den Formschluss zwischen dem Rast- bzw. Klemmverbindungsglied 16 und der Fahrzeugkarosserie 15 wieder aufzuheben, um die Antriebsvorrichtung 3 aus dem Sitz in der Fahrzeugkarosserie 15 zu entfernen. Das Demontagewerkzeug 37 ist als Schieber ausgeführt, welcher in eine Ausnehmung im Rast- bzw. Klemmverbindungsglied 16 einschiebbar ist, was zur Folge hat, dass die Rampe 34, welche im gezeigten Ausführungsbeispiel als federnder Abschnitt ausgebildet ist, in Richtung auf das Gehäuse 14 zu bewegt wird, wodurch der Randbereich der Fahrzeugkarosserie 15 aus der Aufnahmenut 35 freikommt. Daraufhin kann die Antriebsvorrichtung 3 entgegengesetzt zur Pfeilrichtung 21 aus dem Sitz in der Fahrzeugkarosserie 15 herausgenommen werden.

## Patentansprüche

1. Scheibenwischvorrichtung in einem Fahrzeug, mit einer Antriebsvorrichtung (3) zum Antrieb eines Wischarms (4), wobei die Antriebsvorrichtung (3) mittels einer Befestigungsvorrichtung an der Fahrzeugkarosserie befestigt ist, wobei die Befestigungsvorrichtung ein Rast- bzw. Klemmverbindungsglied (16) umfasst, das bezogen auf die Montage- bzw. Demontagerichtung die Antriebsvorrichtung (3) mit Formschluss bzw. Reibschluss in der montierten Position in der Fahrzeugkarosserie (15) hält, und wobei die Befestigungsvorrichtung ein Schwingungsentkopplungselement (19) aufweist, das zwischen der Antriebsvorrichtung (3) und der Fahrzeugkarosserie (15) angeordnet ist, **dadurch gekennzeichnet, dass** das Rast- bzw. Klemmverbindungsglied (16) einen Rasthaken (18) aufweist, der mit einer Rastausnehmung in eine Rastverbindung zu verbringen ist, und dass die Rastausnehmung in das Schwingungsentkopplungselement (19) eingebracht ist, wobei die Befestigung ausschließlich mithilfe des Rast- bzw. Klemmverbindungsgliedes (16) mit Form- bzw. Reibschluss durchzuführen ist.

2. Scheibenwischvorrichtung nach Anspruch 1, **dadurch gekennzeichnet, dass** das Rast- bzw. Klemmverbindungsglied (16) einteilig mit der Fahrzeugkarosserie (15) ausgebildet ist.

3. Scheibenwischvorrichtung nach Anspruch 1 oder 2, **dadurch gekennzeichnet, dass** das Rast- bzw. Klemmverbindungsglied (16) einteilig mit einem Gehäuse (14) der Antriebsvorrichtung (3) ausgebildet ist.

4. Scheibenwischvorrichtung nach einem der Ansprüche 1 bis 3, **dadurch gekennzeichnet, dass** das Rast- bzw. Klemmverbindungsglied (16) als separates Bauteil ausgebildet ist.

5. Scheibenwischvorrichtung in einem Fahrzeug, mit einer Antriebsvorrichtung (3) zum Antrieb eines Wischarms (4), wobei die Antriebsvorrichtung (3) mittels einer Befestigungsvorrichtung an der Fahrzeugkarosserie befestigt ist, wobei die Befestigungsvorrichtung ein Rast- bzw. Klemmverbindungsglied (16) umfasst, das bezogen auf die Montage- bzw. Demontagerichtung die Antriebsvorrichtung (3) mit Formschluss bzw. Reibschluss in der montierten Position in der Fahrzeugkarosserie (15) hält, und wobei die Befestigungsvorrichtung ein Schwingungsentkopplungselement (19) aufweist, das zwischen der Antriebsvorrichtung (3) und der Fahrzeugkarosserie (15) angeordnet ist, **dadurch gekennzeichnet, dass** das Rast- bzw. Klemmverbindungsglied (16) einen Klemmvorsprung (24) aufweist, der in montierter Position der Antriebsvorrichtung (3) eine Klemmkraft auf eine Klemmfläche ausübt, dass die Außenseite des Gehäuses (14) der Antriebsvorrichtung (3) die Klemmfläche bildet und dass der Klemmvorsprung (24) verschwenkbar zwischen einer Klemmposition und einer Außerfunktionsposition an dem Rast- bzw. Klemmverbindungsglied (16) ausgebildet ist.

6. Scheibenwischvorrichtung nach Anspruch 5, **dadurch gekennzeichnet, dass** das Rast- bzw. Klemmverbindungsglied (16) einen Stützabschnitt (25) aufweist, an dem der Klemmvorsprung (24) gehalten ist.

7. Scheibenwischvorrichtung nach Anspruch 6, **dadurch gekennzeichnet, dass** der Stützabschnitt (25) an der Fahrzeugkarosserie (15) aufliegt.

8. Scheibenwischvorrichtung nach Anspruch 5 oder 6, **dadurch gekennzeichnet, dass** an dem Stützabschnitt (25) das Gehäuse (14) der Antriebsvorrichtung (3) aufliegt.

9. Scheibenwischvorrichtung nach einem der Ansprüche 5 bis 8, **dadurch gekennzeichnet, dass** an dem Rast- bzw. Klemmverbindungsglied (16) das Schwingungsentkopplungselement (19) gehalten ist.

10. Scheibenwischvorrichtung nach einem der Ansprüche 1 bis 9, **dadurch gekennzeichnet, dass** das Rast- bzw. Klemmverbindungsglied (16) sowohl mit der Antriebsvorrichtung (3) als auch mit der Fahrzeugkarosserie (15) formschlüssig bzw. reibschlüssig verbunden ist.

11. Scheibenwischvorrichtung in einem Fahrzeug, mit einer Antriebsvorrichtung (3) zum Antrieb eines Wischarms (4), wobei die Antriebsvorrichtung (3) mittels einer Befestigungsvorrichtung an der Fahrzeugkarosserie befestigt ist, wobei die Befestigungsvorrichtung ein Rast- bzw. Klemmverbindungsglied (16) umfasst, das bezogen auf die Montage- bzw. Demontagerichtung die Antriebsvorrichtung (3) mit Formschluss bzw. Reibschluss in der montierten Position in der Fahrzeugkarosserie (15) hält, und wobei die Befestigungsvorrichtung ein Schwingungsentkopplungselement (19) aufweist, das zwischen der Antriebsvorrichtung (3) und der Fahrzeugkarosserie (15) angeordnet ist, **dadurch gekennzeichnet, dass** an dem Rast- bzw. Klemmverbindungsglied (16) eine Rampe (34) angeformt ist, an der in Montagerichtung (21) ein Abschnitt der Fahrzeugkarosserie (15) bzw. der Antriebsvorrichtung (3) entlang gleitet und dass die Rampe zu einer Aufnahmenut (35) in dem Rast- bzw. Klemmverbindungsglied (16) führt, wobei in montierter Position der Abschnitt der Fahrzeugkarosserie (15) bzw. der Antriebsvorrichtung (3) in der Aufnahmenut aufgenommen ist.

12. Scheibenwischvorrichtung nach einem der Ansprüche 1 bis 11, **dadurch gekennzeichnet, dass** die Antriebsvorrichtung (3) als Wischerdirektantrieb ausgebildet ist, bei dem eine Abtriebswelle (13) der Antriebsvorrichtung (3) unmittelbar mit dem Wischarm (4) gekoppelt ist und diesen antreibt.

## Claims

1. Windscreen wiper device in a vehicle, with a drive device (3) for driving a wiper arm (4), wherein the drive device (3) is fastened to the vehicle body by means of a fastening device, wherein the fastening device comprises a latching or clamping connecting member (16) which holds the drive device (3) in the fitted position in the vehicle body (15) with a form-fitting connection or frictional connection based on the installation or removal direction, and wherein the fastening device has a vibration decoupling element (19) which is arranged between the drive device (3) and the vehicle body (15), **characterized in that** the latching or clamping connecting member (16) has a latching hook (18) which can be brought into a latching connection with a latching recess, and **in that** the latching recess is placed into the vibration decoupling element (19), wherein the fastening can be carried out with a form-fitting connection or frictional connection exclusively with the aid of the latching or clamping connecting member (16).

2. Windscreen wiper device according to Claim 1, **characterized in that** the latching or clamping connecting member (16) is formed integrally with the vehicle body (15).

3. Windscreen wiper device according to Claim 1 or 2, **characterized in that** the latching or clamping connecting member (16) is formed integrally with a housing (14) of the drive device (3).

4. Windscreen wiper device according to one of Claims 1 to 3, **characterized in that** the latching or clamping connecting member (16) is formed as a separate component.

5. Windscreen wiper device in a vehicle, with a drive device (3) for driving a wiper arm (4), wherein the drive device (3) is fastened to the vehicle body by means of a fastening device, wherein the fastening device comprises a latching or clamping connecting member (16) which holds the drive device (3) in the fitted position in the vehicle body (15) with a form-fitting connection or frictional connection based on the installation or removal direction, and wherein the fastening device has a vibration decoupling element (19) which is arranged between the drive device (3) and the vehicle body (15), **characterized in that** the latching or clamping connecting member (16) has a clamping projection (24) which, in the fitted position of the drive device (3), exerts a clamping force on a clamping surface, **in that** the outside of the housing (14) of the drive device (3) forms the clamping surface, and **in that** the clamping projection (24) is formed on the latching or clamping connecting member (16) so as to be pivotable between a clamping position and an inoperative position.

6. Windscreen wiper device according to Claim 5, **characterized in that** the latching or clamping connecting member (16) has a supporting section (25) on which the clamping projection (24) is held.

7. Windscreen wiper device according to Claim 6, **characterized in that** the supporting section (25) rests on the vehicle body (15).

8. Windscreen wiper device according to Claim 5 or 6, **characterized in that** the housing (14) of the drive device (3) rests on the supporting section (25).

9. Windscreen wiper device according to one of Claims 5 to 8, **characterized in that** the vibration decoupling element (19) is held on the latching or clamping connecting member (16).

10. Windscreen wiper device according to one of Claims 1 to 9, **characterized in that** the latching or clamping connecting member (16) is connected in a form-fitting manner or frictional manner both to the drive device (3) and to the vehicle body (15).

11. Windscreen wiper device in a vehicle, with a drive device (3) for driving a wiper arm (4), wherein the drive device (3) is fastened to the vehicle body by means of a fastening device, wherein the fastening device comprises a latching or clamping connecting member (16) which holds the drive device (3) in the fitted position in the vehicle body (15) with a form-fitting connection or frictional connection based on the installation or removal direction, and wherein the fastening device has a vibration decoupling element (19) which is arranged between the drive device (3) and the vehicle body (15), **characterized in that** a ramp (34) on which a section of the vehicle body (15) or of the drive device (3) slides along in the installation direction (21) is integrally formed on the latching or clamping connecting member (16), and **in that** the ramp leads to a receiving groove (35) in the latching or clamping connecting member (16), wherein, in the fitted position, the section of the vehicle body (15) or of the drive device (3) is accommodated in the receiving groove.

12. Windscreen wiper device according to one of Claims 1 to 11, **characterized in that** the drive device (3) is in the form of a wiper direct drive, in which an output shaft (13) of the drive device (3) is directly coupled to the wiper arm (4) and drives the latter.

## Revendications

1. Dispositif d'essuie-glace dans un véhicule, comprenant un dispositif d'entraînement (3) pour l'entraînement d'un bras d'essuie-glace (4), le dispositif d'entraînement (3) étant fixé au moyen d'un dispositif de fixation à la carrosserie du véhicule, le dispositif de fixation comprenant un organe de liaison par encliquetage ou par serrage (16), qui, par rapport à la direction de montage ou de démontage, retient le dispositif d'entraînement (3) par engagement par correspondance géométrique ou par friction dans la position montée dans la carrosserie du véhicule (15), et le dispositif de fixation présentant un élément de désaccouplement d'oscillations (19) qui est disposé entre le dispositif d'entraînement (3) et la carrosserie du véhicule (15), **caractérisé en ce que** l'organe de liaison par encliquetage ou par serrage (16) présente un crochet d'encliquetage (18) qui peut être amené en liaison d'encliquetage avec un évidement d'encliquetage, et **en ce que** l'évidement d'encliquetage est introduit dans l'élément de désaccouplement d'oscillations (19), la fixation devant être effectuée exclusivement à l'aide de l'organe de liaison par encliquetage ou par serrage (16) par engagement par correspondance géométrique ou par friction.

2. Dispositif d'essuie-glace selon la revendication 1, **caractérisé en ce que** l'organe de liaison par encliquetage ou par serrage (16) est réalisé d'une seule pièce avec la carrosserie du véhicule (15).

3. Dispositif d'essuie-glace selon la revendication 1 ou 2, **caractérisé en ce que** l'organe de liaison par encliquetage ou par serrage (16) est réalisé d'une seule pièce avec un boîtier (14) du dispositif d'entraînement (3).

4. Dispositif d'essuie-glace selon l'une quelconque des revendications 1 à 3, **caractérisé en ce que** l'organe de liaison par encliquetage ou par serrage (16) est réalisé sous forme de composant séparé.

5. Dispositif d'essuie-glace dans un véhicule, comprenant un dispositif d'entraînement (3) pour l'entraînement d'un bras d'essuie-glace (4), le dispositif d'entraînement (3) étant fixé au moyen d'un dispositif de fixation sur la carrosserie du véhicule, le dispositif de fixation comprenant un organe de liaison par encliquetage ou par serrage (16), qui, par rapport à la direction de montage ou de démontage, retient le dispositif d'entraînement (3) par engagement par correspondance géométrique ou par friction dans la position montée dans la carrosserie du véhicule (15), et le dispositif de fixation présentant un élément de désaccouplement d'oscillations (19) qui est disposé entre le dispositif d'entraînement (3) et la carrosserie du véhicule (15), **caractérisé en ce que** l'organe de liaison par encliquetage ou par serrage (16) présente une saillie de serrage (24), qui, dans la position montée du dispositif d'entraînement (3), exerce une force de serrage sur une surface de serrage, **en ce que** le côté extérieur du boîtier (14) du dispositif d'entraînement (3) forme la surface de serrage et **en ce que** la saillie de serrage (24) est réalisée de manière à pouvoir pivoter entre une position de serrage et une position hors fonction sur l'organe de liaison par encliquetage ou par serrage (16).

6. Dispositif d'essuie-glace selon la revendication 5, **caractérisé en ce que** l'organe de liaison par encliquetage ou par serrage (16) présente une portion de support (25) sur laquelle est retenue la saillie de serrage (24).

7. Dispositif d'essuie-glace selon la revendication 6, **caractérisé en ce que** la portion de support (25) repose sur la carrosserie du véhicule (15).

8. Dispositif d'essuie-glace selon la revendication 5 ou 6, **caractérisé en ce que** le boîtier (14) du dispositif d'entraînement (3) repose sur la portion de support (25).

9. Dispositif d'essuie-glace selon l'une quelconque des revendications 5 à 8, **caractérisé en ce que** l'élément de désaccouplement d'oscillations (19) est retenu sur l'organe de liaison par encliquetage ou par serrage (16).

10. Dispositif d'essuie-glace selon l'une quelconque des revendications 1 à 9, **caractérisé en ce que** l'organe de liaison par encliquetage ou par serrage (16) est connecté par engagement par correspondance géométrique ou par friction à la fois au dispositif d'entraînement (3) et à la carrosserie du véhicule (15).

11. Dispositif d'essuie-glace dans un véhicule, comprenant un dispositif d'entraînement (3) pour l'entraînement d'un bras d'essuie-glace (4), le dispositif d'entraînement (3) étant fixé au moyen d'un dispositif de fixation à la carrosserie du véhicule, le dispositif de fixation comprenant un organe de liaison par encliquetage ou par serrage (16), qui, par rapport à la direction de montage ou de démontage, retient le dispositif d'entraînement (3) par engagement par correspondance géométrique ou par friction dans la position montée dans la carrosserie du véhicule (15), et le dispositif de fixation présentant un élément de désaccouplement d'oscillations (19) qui est disposé entre le dispositif d'entraînement (3) et la carrosserie du véhicule (15), **caractérisé en ce qu'**une rampe (34) est façonnée sur l'organe de liaison par encliquetage ou par serrage (16), une portion de la carrosserie (15) ou du dispositif d'entraînement (3) glissant le long de ladite rampe dans la direction de montage (21) et **en ce que** la rampe conduit à une rainure de réception (35) dans l'organe de liaison par encliquetage ou par serrage (16), la portion de la carrosserie du véhicule (15) ou du dispositif d'entraînement (3) étant reçue dans la rainure de réception dans la position montée.

12. Dispositif d'essuie-glace selon l'une quelconque des revendications 1 à 11, **caractérisé en ce que** le dispositif d'entraînement (3) est réalisé sous forme d'entraînement direct d'essuie-glace, dans lequel un arbre de sortie (13) du dispositif d'entraînement (3) est accouplé directement au bras d'essuie-glace (4) et l'entraîne.
